# EUROPEAN PATENT SPECIFICATION

(11) **EP 2 477 507 B1**
(45) Date of publication and mention of the grant of the patent: **05.04.2017**
(21) Application number: 10757141.6
(22) Date of filing: 16.09.2010
(51) Int. Cl.: A23L 33/00

(54) **DRYBLENDED NUTRITIONAL POWDERS**
TROCKENGEMISCHTE NAHRUNGSPULVER
POUDRES NUTRITIONNELLES MÉLANGÉES À SEC

(30) Priority: 16.09.2009 US 242922 P
(43) Date of publication of application: 25.07.2012
(73) Proprietor: ABBOTT LABORATORIES, Abbott Park, Illinois 60064 (US)
(72) Inventor: MATOVICH, Eric, M, London, Ohio 43140 (US); CLINGER, Christine, F, New Albany, Ohio 43054 (US); LAMB, Catherine, S, Westerville, Ohio 43082 (US)
(74) Representative: Boult Wade Tennant
(86) International application number: PCT/US2010/049048
(87) International publication number: WO 2011/034988

(56) References cited:
- EP-A1- 0 012 503
- US-A- 4 614 663
- US-A1- 2005 129 738
- US-A1- 2009 162 518
- US-A1- 2009 162 521

## Description

### TECHNICAL FIELD

The present disclosure relates to a method of manufacturing dryblended infant formula powders, that include introducing a dryblended carbohydrate, such as lactose, and dryblended lecithin into a base nutritional powder.

### BACKGROUND OF THE DISCLOSURE

A variety of nutritional formulas are commercially available today. These formulas typically contain a balance of proteins, carbohydrates, lipids, vitamins, and minerals tailored to the nutritional needs of the intended user, and include product forms such as ready-to-drink liquids, reconstitutable powders, nutritional bars, and the like. Among the many nutritional formulas commercially available today, infant formulas have become particularly well known and commonly used in providing a supplemental, primary, or sole source of nutrition early in life.

Powdered infant formulas are especially popular for providing nutrition to infants and their use continues to increase around the world. These powdered infant formulas are typically prepared by making at least two separate slurries that are first blended together. One slurry may be an aqueous-based slurry and one may be an oil-based slurry. After blending, the resulting mixture is generally heat-treated, standardized, heat-treated a second time, spray dried, agglomerated and packaged. With this manufacturing process, a substantial amount of energy is required to spray dry the product and the drying process significantly increases manufacturing time. Additionally, the spray driers may require frequent cleaning to reduce build up of powder in the dryers.

It would therefore be desirable to formulate a powdered infant formula that has a portion of the carbohydrates directly added to the spray dried product to reduce the drying time of the product and resulting costs of the manufacturing process. II has been discovered, however, that the dryblending of a carbohydrate, such as lactose, directly into the spray dried infant formula results in an undesirable amount of foaming of the product upon reconstitution with water.

It has now been discovered that one method for reducing the amount of foaming of a spray dried infant formula including a dryblended carbohydrate, such as lactose, upon reconstitution is to also introduce lecithin as a dryblended component into the spray dried infant formula, it has been found that powdered infant formulas including a dryblended carbohydrate, such as lactose, and a dryblended lecithin component have significantly reduced or eliminated foaming upon reconstitution as compared to spray dried infant formulas including a dryblended carbohydrate but no dryblended lecithin.

EP 0012503 relates to a lecithin concentrate which is readily dispersible in water. US 2007/0253941 relates to methods of enhancing the bio-availability of coenzyme Q10 and supporting the cardiovascular system. US 2009/0110797 relates to cocoa products and compositions containing the cocoa products including a composition comprising a sweetner, a digestion resistant soluble fiber, a cocoa powder and a dispersing agent. US 5637337 relates to a powdery antifoaming agent for food containing straight chain fatty acid glycol monoester, lecithin, an agent for improving water dispersibility and a powdery dextrin.

### SUMMARY OF THE DISCLOSURE

The invention is directed to methods of manufacturing nutritional powders, which are infant formula powders. The nutritional powder is manufactured by first preparing a base nutritional powder and then introducing into the base nutritional powder a carbohydrate and lecithin, wherein the nutritional powder is an infant formula.

The present disclosure is further directed to nutritional powders and powdered infant formulas and powdered toddler formulas that exhibit reduced foaming upon reconstitution prior to consumption. An infant formula is disclosed that is comprised of a base nutritional powder that includes a dryblended carbohydrate, such as lactose, and dryblended lecithin.

It has been found that the dryblending of a carbohydrate, such as lactose, directly into the spray dried infant formula results in an undesirable amount of foaming of the product upon reconstitution for consumption. It has also been found, however, that the nutritional powders of the present disclosure, which are formulated with a dryblended carbohydrate and a dryblended lecithin, have significantly reduced foaming upon reconstitution. It has been found in particular that the nutritional powder can be manufactured and, subsequent to drying, have a
carbohydrate and lecithin dryblended therein such that upon reconstitution, excessive foaming is eliminated. US 2009/162521 and US 2009/162518 are directed to nutritional powders having improved oxidative stability and sensory performance. The references disclose oil or water based slurries containing lecithin or lactose.

### DETAILED DESCRIPTION OF THE DISCLOSURE

The methods of manufacturing nutritional powders of the present disclosure include preparing a base nutritional powder that has been subjected to a drying process and dryblending therein at least one carbohydrate and lecithin. The nutritional powders of the present disclosure comprise a protein source, a lipid source, a carbohydrate source, and include at least one carbohydrate and lecithin that have been dryblended into the dried base nutritional powder. These and other essential or optional elements or limitations of the nutritional powders and methods of manufacturing nutritional powders of the present disclosure are described in detail hereafter.

The term "infant" as used herein, unless otherwise specified, refers to children not more than about one year of age, and includes infants from 0 to about 4 months of age, infants from about 4 to about 8 months of age, infants from about 8 to about 12 months of age, low birth weight infants at less than 2,500 grams at birth, and preterm infants born at less than about 37 weeks gestational age, typically from about 26 weeks to about 34 weeks gestational age. The term "child" or "children" as used herein refers to children not more than 12 years of age, and includes children from about 12 months to about 12 years of age. The term "adult" as used herein refers to adults and children about 12 years and older.

The term "base nutritional powder" as used herein, unless otherwise specified, refers to a powdered nutritional composition that has been subjected to a drying process but does not include any dryblended components and is designed for infants, toddlers, children adults, or combinations thereof, that contains nutrients such as proteins, carbohydrates, lipids, vitamins, minerals, and electrolytes to potentially serve as a supplement, primary, or sole source of nutrition.

The term "nutritional powder" as used herein, unless otherwise specified, refers to a powdered nutritional composition that has been subjected to a drying process and includes dryblended ingredients and is designed for infants, toddlers, children adults, or combinations thereof, that contains sufficient nutrients such as proteins, carbohydrates, lipids, vitamins, minerals, and electrolytes to potentially serve as a supplement, primary, or sole source of nutrition.

The term "infant formula" as used herein, unless otherwise specified, refers to a nutritional composition designed for infants that contains sufficient nutrients such as proteins, carbohydrates, lipids, vitamins, and minerals to potentially serve as a supplemental, primary, or sole source of nutrition.

The term "dryblended" as used herein, unless otherwise specified, refers to the addition of a component or ingredient into a base nutritional powder.

All percentages, parts and ratios as used herein, are by weight of the total composition, unless otherwise specified. All such weights as they pertain to listed ingredients are based on the active level and, therefore, do not include solvents or by-products that may be included in commercially available materials, unless otherwise specified.

Numerical ranges as used herein are intended to include every number and subset of numbers within that range, whether specifically disclosed or not. Further, these numerical ranges should be construed as providing support for a claim directed to any number or subset of numbers in that range. For example, a disclosure of from 1 to 10 should be construed as supporting a range of from 2 to 8, from 3 to 7, from 5 to 6, from 1 to 9, from 3.6 to 4.6, from 3.5 to 9.9, and so forth.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The nutritional powders and infant formulas of the present disclosure may also be substantially free of any optional or selected essential ingredient or feature described herein, provided that the remaining powder or formula still contains all of the required ingredients or features as described herein. In this context, and unless otherwise specified, the term "substantially free" means that the selected composition contains less than a functional amount of the optional ingredient, typically less than 0.1% by weight, and also including zero percent by weight of such optional or selected essential ingredient.

The nutritional powders, infant formulas, and corresponding manufacturing methods of the present disclosure can comprise, consist of, or consist essentially of the essential elements and limitations of the disclosure as described herein, as well as any additional or optional ingredients, components, or limitations described herein or otherwise useful in nutritional powdered formula applications.

### Dryblended Components

### A. Carbohydrate

The nutritional powders and infant formulas of the present disclosure, in addition to various components described in the 'nutrients" and "Optional Ingredients" sections hereinbelow, include at least one carbohydrate that is dryblended into the nutritional powder or infant formula. By dryblending a carbohydrate component into a base nutritional powder that has been subjected to a drying process, the amount of carbohydrate that is introduced into the one or more slurries used to produce the base nutritional powder can be significantly reduced, while maintaining the overall carbohydrate content in the powdered product. This reduction in the "up front" addition of the carbohydrate results in reduced overall manufacturing costs as the drying time for the mixture of slurries is reduced and equipment maintenance costs may also be reduced.

Carbohydrates suitable for dryblending into the base nutritional powders of the present disclosure can be simple or complex, lactose-containing or lactose-free, or combinations thereof. Non-limiting examples include hydrolyzed, intact, naturally and/or chemically modified cornstarch, maltodextrin, glucose polymers, sucrose, corn syrup solids, rice or potato derived carbohydrate, glucose, fructose, lactose, and indigestible oligosaccharides such as fructooligosaccharides (FOS), and combinations thereof. The carbohydrate may be either organic or non-organic in nature. In a preferred embodiment, the carbohydrate is lactose. In another preferred embodiment of the present disclosure, the carbohydrate that is dryblended into the base nutritional powder is a non-liquid carbohydrate in powdered form. Generally, the carbohydrate will be a 200 mesh, or even a 100 mesh, ingredient in order to facilitate the homogeneous dryblending of the carbohydrate in the nutritional base powder. In one embodiment, a particularly preferred carbohydrate is a food grade, 200 mesh or 100 mesh powdered lactose. A specific food grade lactose suitable for dryblending into a base nutritional powder in accordance with the present disclosure is LE-PRO®LAC 45115 (Leprino Foods, Denver, CO).

The carbohydrate is dryblended into the base nutritional powder to form the nutritional powder (such as an infant formula) in any amount acceptable for the manufacturing processes. The carbohydrate that is dryblended into the base nutritional powder may be the same carbohydrate as introduced into one or more slurries used to form the base nutritional powder, or it may be a different carbohydrate. Generally, the carbohydrate, such as lactose, is dryblended into the base nutritional powder in an amount (by weight of the nutritional powder) of from about 5% to about 50%, or from about 5% to about 40%, or from about 5% to about 33%, or from about 15% to about 20%, or from about 10% to about 50%, or from about 10% to about 40%, or from about 10% to about 33%, or from about 10% to about 20% or from about 20% to about 50%, or from about 20% to about 40%, or from about 20% to about 30%, or from about 25% to about 50%, or from about 25% to about 40%, or from about 25 to about 30%. In some embodiments, the carbohydrate may be dryblended into the base nutritional powder in a specific amount of 5%, 10%, 15%, 20%, 25%, 30%, 35%, 40%, 45%, or even 50% (by weight of the nutritional powder).

### B. Lecithin

The dryblending of the carbohydrate into the base nutritional powder to form the nutritional powder provides numerous benefits as outlined above, however it was unexpectedly discovered that upon reconstituting the nutritional powder including the dryblended carbohydrate (as opposed to the reconstitution of a nutritional powder wherein all of the carbohydrate was added during the manufacturing of the base nutritional powder), undesirable foaming occurred that resulted in a less desirable consumer product. Once this unexpected problem was discovered, it is also unexpectedly discovered that by dryblending an amount of lecithin into the base nutritional powder including the dryblended carbohydrate, the amount of foam created upon reconstitution was significantly reduced. Along with the foam reduction benefit upon reconstitution, it is also unexpectedly discovered that by adding lecithin through dryblending into the base nutritional powder, there is a reduction in the amount of cake build up in spray drying equipment, which translates into a lower cost manufacturing process.

The lecithin is dryblended into the base nutritional powder either before, after or simultaneously with the dryblended carbohydrate to form the nutritional powder. Although fine granules and granules of lecithin are within the scope of the invention, powdered lecithin is preferred. In some embodiments, the lecithin may be a dry-deoiled lecithin.

Standard, conventional powdered lecithin (organic or non-organic) is generally preferred, however powdered enzyme modified lecithin, powdered hydrolyzed lecithin, and powdered modified lecithin powders are also within the scope of the present disclosure and suitable for use as a lecithin source. Generally, it is preferred to utilize a 200 mesh, or even a 100 mesh, lecithin in order facilitate the homogeneous dryblending of the lecithin into the base nutritional powder. One suitable lecithin, source for dryblending into the base nutritional powders of the present disclosure is ULTRALEC® F Deoiled Lecithin (ADM Specialty Food Ingredients, Decatur. IL). Another suitable lecithin source for dryblending into the base nutritional powders is Solec ™ F (The Solae Company. St. Louis, MO).

The lecithin is introduced into the base nutritional powder to form the nutritional powder (either before, after or simultaneously with the dryblending of the lactose) in an amount (by weight of the nutritional powder) of from about 0.03% to about 5%, or from about 0.03% to about 4%, or from about 0.03% to about 3%, or from about 0.03% to about 2%, or from about 0.03% to about 1%, or from about 0.13% to about 0.5%, or from about 0.5% to about 5%. or from about 0.5% to about 3%, or from about 0.5% to about 1%. or from about 0.13% to about 3% , or from about 0.13% to about 1 %.

### NUTRIENTS

The nutritional powders of the present disclosure may comprise sufficient types and amounts of nutrients to meet the targeted dietary needs of the intended user. These nutritional powders may therefore comprise protein, carbohydrate, and a lipid component (all either organic or non-organic) in addition to the dryblended carbohydrate and lecithin discussed above. The nutritional powders may also include vitamins, minerals, or other ingredients suitable for use in nutritional powders.

Table 1 provides additional ranges of various components for inclusion in the nutritional powders of the present disclosure.

**Table 1**

| Nutrient* | 1^{st} Embodiment | 2^{nd} Embodiment | 3^{rd} Embodiment |
|---|---|---|---|
| Carbohydrate: % Total Calories | 20-85 | 30-60 | 35-55 |
| Lipid: % Total Calories | 5-70 | 20-60 | 25-50 |
| Protein: % Total Calories | 2-75 | 5-50 | 7-40 |

| | | | |
|---|---|---|---|
| *Each numerical value is preceded by the term "about" | | | |

Many different sources and types of carbohydrates, lipids, proteins, minerals and vitamins are known and can be used in the nutritional powders of the present disclosure, provided that such nutrients are compatible with the added ingredients in the selected formula, are safe for their intended use, and do not otherwise unduly impair product performance.

Carbohydrates suitable for use in the nutritional powders of the present disclosure can be simple or complex, lactose-containing or lactose-free, or combinations thereof, non-limiting examples of which include hydrolyzed, intact, naturally and/or chemically modified cornstarch, maltodextrin, glucose polymers, sucrose, corn syrup, corn syrup solids, rice or potato derived carbohydrate, glucose, fructose, lactose, high fructose corn syrup and indigestible oligosaccharides such as fructooligosaccharides (FOS), and combinations thereof.

Non-limiting examples of proteins suitable for use in the nutritional powders include hydrolyzed, partially hydrolyzed or non-hydrolyzed, proteins or protein sources, and can be derived from any known or otherwise suitable source such as milk (e.g., casein, whey), animal (e.g., meat, fish), cereal (e.g., rice, corn), vegetable (e.g., soy), or combinations thereof. The proteins for use herein can also include, or be entirely or partially replaced by, free amino acids known for use in nutritional powders, non-limiting examples of which include tryptophan, glutamine, tyrosine, methionine, cysteine, arginine, and combinations thereof. Other (non-protein) amino acids typically added to nutritional powders include carnitine and taurine. In some cases, the D-forms of the amino acids are considered as nutritionally equivalent to the L-forms, and isomer mixtures are used to lower cost (for example, D,L-methionine).

Non-limiting examples of lipids suitable for use in the nutritional powders include coconut oil, soy oil, corn oil, olive oil, safflower oil, high oleic safflower oil, MCT oil (medium chain triglycerides), sunflower oil, high oleic sunflower oil, palm and palm kernel oils, palm olein, canola oil, marine oils, cottonseed oils, and combinations thereof.

In addition to these food grade oils, structured lipids may be incorporated into the nutritional if desired. Structured lipids are known in the art, descriptions of which can be found in INFORM, Vol. 8, no. 10, page 1004, Structured lipids allow fat tailoring (October 1997); and U.S. Pat. No. 4,871,768, the latter description of which is incorporated herein by reference. Structured lipids are predominantly triacylglycerols containing mixtures of medium and long chain fatty acids on the same glycerol nucleus. Structured lipids are also described in U.S. Pat. No. 6,160,007, which is also incorporated herein by reference.

The nutritional powders of the present disclosure may further comprise any of a variety of vitamins in addition to the components described above. Non-limiting examples of vitamins include vitamin A, vitamin D, vitamin E, vitamin K, thiamine, riboflavin, pyridoxine, vitamin B 12. niacin, folic acid, pantothenic acid, biotin, vitamin C, choline, chromium, carnitine, inositol, salts and derivatives thereof, and combinations thereof.

The nutritional powders may further comprise any of a variety of minerals, non-limiting examples of which include calcium, phosphorus, magnesium, iron, zinc, manganese, copper, iodine, sodium, potassium, chloride, and combinations thereof.

The infant formula embodiments of the present disclosure preferably comprise nutrients in accordance with the relevant infant formula guidelines for the targeted consumer or user population, as example of which would be the Infant Formula Act, 21 U.S.C. Section 350(a).

The nutritional powders of the present disclosure include those embodiments containing the carbohydrate, lipid, and protein concentrations described in Table 2 (Nutritional Formula Macronutrients).

**Table 2***

| Nutrient | Embodiment | g/100 kcal | g/100 g total solids | g/L (as fed) |
|---|---|---|---|---|
| Carbohydrate | 1^{st} Embodiment | 8-16 | 30-90 | 54-108 |
| | 2^{nd} Embodiment | 9-13 | 45-60 | 57-79 |
| | 3^{rd} Embodiment | 15-19 | 63-81 | 157-203 |
| Lipid | 1^{st} Embodiment | 3-8 | 15-42 | 20-54 |
| | 2^{nd} Embodiment | 4-6.6 | 20-30 | 27-45 |
| | 3^{rd} Embodiment | 2-5 | 8-21 | 20-53 |
| Protein | 1^{st} Embodiment | 1-3.9 | 8-20.5 | 7-24 |
| | 2^{nd} Embodiment | 1.5-3.4 | 10-17 | 10-23 |
| | 3^{rd} Embodiment | 3.5-6.0 | 14.8-25.3 | 37-63 |

| | | | | |
|---|---|---|---|---|
| *all numerical values preceded by the term "about" | | | | |

The nutritional powders of the present disclosure include those embodiments that comprise per 100 kcal of reconstituted formula one or more of the following: vitamin A (from about 250 to about 1250 IU), vitamin D (from about 40 to about 150 IU), vitamin K (greater than about 4 mcg), vitamin E (at least about 0.3 IU), vitamin C (at least about 8 mg), thiamine (at least about 8 mcg), vitamin B12 (at least about 0.15 mcg), niacin (at least about 250 mcg), folic acid (at least about 4 mcg), pantothenic acid (at least about 300 mcg), biotin (at least about 1.5 mcg), choline (at least about 7 mg), and inositol (at least about 4 mg).

The nutritional formulas of the present disclosure include those embodiments that comprise per 100 kcal of reconstituted formula one or more of the following: calcium (at least about 50 mg), phosphorus (at least about 25 mg), magnesium (at least about 6 mg), iron (at least about 0.15 mg), iodine (at least about 5 mcg), zinc (at least about 0.5 mg), copper (at least about 60 mg), manganese (at least about 5 mcg), sodium (from about 20 to about 60 mg), potassium (from about 80 to about 200 mg), and chloride (from about 55 to about 150 mg).

### OPTIONAL INGREDIENTS

The nutritional powders of the present disclosure may further comprise other optional components that may modify the physical, chemical, aesthetic or processing characteristics of the formulas or serve as pharmaceutical or additional nutritional components when used in the targeted population. Many such optional ingredients are known or other suitable for use in food and nutritional products, including infant formulas, and may also be used in the nutritional powders of the present disclosure, provided that such optional materials are compatible with the essential materials described herein, are safe for their intended use, and do not otherwise unduly impair product performance.

Non-limiting examples of such optional ingredients include preservatives, anti-oxidants, emulsifying agents, buffers, colorants, flavors, nucleotides, and nucleosides, probiotics, prebiotics, lactoferrin, and related derivatives, thickening agents and stabilizers, and so forth.

### PRODUCT FORM

The nutritional powders of the present disclosure may have any caloric density suitable for the targeted or intended patient population, or provide such a density upon reconstitution of the nutritional powder. Most common caloric densities for the infant formula embodiments of the present disclosure are generally at least about 19 kcal/fl oz (660 kcal/liter), more typically from about 20 kcal/fl oz (675-680 kcal/liter) to about 25 kcal/fl oz (820 kcal/liter), even more typically from about 20 kcal/fl oz (675-680 kcal/liter) to about 24 kcal/fl oz (800-810 kcal/liter). Generally, the 22-24 kcal/fl oz formulas are more commonly used in pre-term or low birth weight infants, and the 20-21 kcal/fl oz (675-680 to 700 kcal/liter) formulas are more often used in term infants. Non-infant and adult nutritional powders may have any caloric density suitable for the targeted or intended population.

The nutritional powders of the present disclosure are typically in the form of flowable or substantially flowable particulate compositions, or at least particulate compositions that can be easily scooped and measured with a spoon or similar other device, wherein the compositions can easily be reconstituted by the intended user with a suitable aqueous fluid, typically water, to form a liquid nutritional formula for immediate oral or enteral use. In this context, "immediate" use generally means within about 48 hours, most typically within about 24 hours, preferably right after reconstitution. These powder embodiments include spray dried, agglomerated, dry mixed or other known or otherwise effective particulate form. The quantity of a nutritional powder required to produce a volume suitable for one serving may vary.

The nutritional powders of the present disclosure may be packaged and sealed in single or multi-use containers, and then stored under ambient conditions for up to about 36 months or longer, more typically from about 12 to about 24 months. For multi-use containers, these packages can be opened and then covered for repeated use by the ultimate user, provided that the covered package is then stored under ambient conditions (e.g., avoid extreme temperatures) and the contents used within about one month or so.

### METHODS OF MANUFACTURE

The nutritional base powders (into which the carbohydrate and lecithin are dryblended) of the present disclosure may be prepared by any known or otherwise effective technique suitable for making and formulating a nutritional base powder or similar other formula, variations of which may depend upon variables such as the ingredient combination, packaging and container selection, and so forth, for the desired nutritional base powder. Such techniques and variations for any given formula are easily determined and applied by one of ordinary skill in the nutritional base powder or manufacturing arts.

The nutritional base powders of the present disclosure, including the exemplified formulas described hereinafter, can therefore be prepared by any of a variety of known or otherwise effective formulation or manufacturing methods. These methods most typically involve the initial formation of an aqueous slurry containing carbohydrates, proteins, lipids, stabilizers or other formulation aids, vitamins, minerals, or combinations thereof. The slurry is emulsified, pasteurized, homogenized, and cooled. Various other solutions, mixtures, or other materials may be added to the resulting emulsion before, during, or after further processing. This emulsion can then be further diluted, heat-treated, and subsequently dried via spray-drying or the like to produce a nutritional base powder. Other suitable methods of producing a nutritional base powder are described, for example, in U.S. Pat. No. 6,365,218 (Borschel, et al.), U.S. Pat. No. 6,589,576 (Borschel, et al.), U.S. Pat. No. 6,306,908 (Carlson, et al.), U.S. Patent Application No. 20030118703 (Nguyen, et al.), all of which are hereby incorporated by reference.

Once the nutritional base powder has been produced, the carbohydrate as described above and the lecithin as described above are dryblended into the nutritional base powder to produce the nutritional powders of the present disclosure- The carbohydrate may be introduced before the lecithin, simultaneously with the lecithin, or after the addition of the lecithin. The carbohydrate and the lecithin are introduced into the base nutritional powder and thoroughly mixed into the base nutritional powder using suitable conventional mixing equipment to produce a substantially homogeneous nutritional powder.

### EXAMPLES

The following examples further describe and demonstrate specific embodiments within the scope of the present disclosure. The examples are given solely for the purpose of illustration and are not to be construed as limitations of the present disclosure, as many variations thereof are possible without departing from the spirit and scope of the disclosure. All exemplified amounts are weight percentages based upon the total weight of the composition, unless otherwise specified.

Each of the exemplified formulas is fed to humans to provide sole, primary, or supplemental nutrition. Each composition contains the dry blend of lactose and lecithin as described herein, wherein each composition has significantly reduced or eliminated foaming upon reconstitution as compared to spray dried infant formulas including a dryblended carbohydrate but no dryblended lecithin.

### Examples 1-5

The following examples illustrate powdered nutritional infant formulas of the present disclosure, including methods of making and using the powdered infant formulas. Formula ingredients for each batch are listed in Tables 3A, 3B, 3C, and 3D.

**Table 3A: Nutritional Infant Formulas**

| **Ingredients** | **Example 1** | **Example 2** | **Example 3** | **Example 4** | **Example 5** |
|---|---|---|---|---|---|
| | Quantity (lbs) per 1000 lbs | Quantity (lbs) per 1000 lbs | Quantity (lbs) per 1000 lbs | Quantity (lbs) per 1000 lbs | Quantity (lbs) per 1000 lbs |
| **Base Powder Ingredients** | | | | | |
| Non-Fat Dry Milk | 203.16 204.10 | | 203.80 | 203.92 | 212.41 |
| Lactose | 188.31 | 339.18 | 88.90 | 39.02 | 0 |
| High Oleic Safflower Oil | 115.89 | 116.43 | 116.26 | 116.39 | 119.06 |
| Soy Oil | 88.04 | 88.45 | 88.32 | 88.42 | 84.23 |
| Coconut Oil | 81.09 | 81.47 | 81.35 | 81.44 | 83.11 |
| Galactooligosaccharides | 66.87 | 67.18 | 67.08 | 67.12 | 67.12 |
| Whey Protein Concentrate | 50.00 | 50.23 | 50.15 | 50.18 | 50.77 |
| Potassium Citrate (1) | 5.72 | 5.75 | 5.74 | 5.74 | 5.45 |
| Calcium Carbonate | 4.03 | 4.05 | 4.05 | 4.05 | 4.37 |
| Arachidonic Acid | 3.69 | 2.94 | 2.94 | 2.94 | 2.85 |
| Potassium Chloride | 1.25 | 1.26 | 1.26 | 1.26 | 1.24 |
| Docosahexaenoic Acid | 1.11 | 1.11 | 1.11 | 1.11 | 1.09 |
| Magnesium Chloride | 1.03 | 1.04 | 1.04 | 1.04 | 0.95 |
| Sodium Chloride | 0.59 | 0.59 | 0.59 | 0.59 | 0.34 |
| Choline Chloride | 0.43 | 0.43 | 0.43 | 0.43 | 0.43 |
| Vitamin ADEK | 0.39 | 0.39 | 0.39 | 0.39 | 0.36 |
| Ascorbyl Palmitate | 0.37 | 0.37 | 0.37 | 0.37 | 0.36 |
| Mixed Carotenoid Premix | 0.35 | 0.35 | 0.35 | 0.19 | 0.19 |
| Mixed Tocopherols | 0.16 | 0.16 | 0.16 | 0.16 | 0.16 |
| Ascorbic Acid | 1.27 | 1.27 | 1.27 | 1.27 | 1.27 |
| Potassium Citrate (3) | 3.41 | 3.42 | 3.42 | 3.42 | 3.42 |
| Riboflavin | 0.003 | 0.003 | 0.003 | 0.003 | 0.003 |
| L-Carniitine | 0.026 | 0.026 | 0.026 | 0.026 | 0.026 |
| Vitamin/Mineral Premix | 1.11 | 1.11 | 1.11 | 1.11 | 1.11 |
| Ferrous Sulfate | 0.45 | 0.45 | 0.45 | 0.45 | 0.47 |
| Potassium Citrate (2) | 0.026 | 0.026 | 0.026 | 0.026 | 0.026 |
| Nucleotide/Choline Premix | 2.33 | 2.34 | 2.34 | 2.34 | 2.39 |
| **Dryblend Ingredients** | | | | | |
| Lactose (Food Grade: 100 mesh) | 200.00 | 50.00 | 300.00 | 350.00 | 378.37 |
| Lecithin (ULTRALEC® F Deoiled Lecithin) | 5.00 | 1.30 | 2.50 | 2.00 | 2.00 |

**Table 3B: Nutritional Infant Formulas**

| **Ingredients** | **Example 1** | **Example 2** | **Example 3** | **Example 4** | **Example 5** |
|---|---|---|---|---|---|
| | Quantity (lbs) per 1000 lbs | Quantity (lbs) per 1000 lbs | Quantity (lbs) per 1000 lbs | Quantity (lbs) per 1000 lbs | Quantity (lbs) per 1000 lbs |
| **Base Powder Ingredients** | | | | | |
| Non-Fat Dry Milk | 203.16 | 204.10 | 203.80 | 142.94 | 90.78 |
| Lactose | 288.31 | 239.18 | 138.90 | 0 | 0 |
| High Oleic Safflower Oil | 115.89 | 116.43 | 116.26 | 116.39 | 119.06 |
| Soy Oil | 88.04 | 88.45 | 88.32 | 88.42 | 84.23 |
| Coconut Oil | 81.09 | 81.47 | 81.35 | 81.44 | 83.11 |
| Galactooligosaccharides | 66.87 | 67.18 | 67.08 | 67.12 | 67.12 |
| Whey Protein Concentrate | 50.00 | 50.23 | 50.15 | 50.18 | 50.77 |
| Potassium Citrate (1) | 5.72 | 5.75 | 5.74 | 5.74 | 5.45 |
| Calcium Carbonate | 4.03 | 4.05 | 4.05 | 4.05 | 4.37 |
| Arachidonic Acid | 3.69 | 2.94 | 2.94 | 2.94 | 2.85 |
| Potassium Chloride | 1.25 | 1.26 | 1.26 | 1.26 | 1.24 |
| Docosahexaenoic Acid | 1.11 | 1.11 | 1.11 | 1.11 | 1.09 |
| Magnesium Chloride | 1.03 | 1.04 | 1.04 | 1.04 | 0.95 |
| Sodium Chloride | 0.59 | 0.59 | 0.59 | 0.59 | 0.34 |
| Choline Chloride | 0.43 | 0.43 | 0.43 | 0.43 | 0.43 |
| Vitamin ADEK | 0.39 | 0.39 | 0.39 | 0.39 | 0.36 |
| Ascorbyl Palmitate | 0.37 | 0.37 | 0.37 | 0.37 | 0.36 |
| Mixed Carotenoid Premix | 0.35 | 0.35 | 0.35 | 0.19 | 0.19 |
| Mixed Tocopherols | 0.16 | 0.16 | 0.16 | 0.16 | 0.16 |
| Ascorbic Acid | 1.27 | 1.27 | 1.27 | 1.27 | 1.27 |
| Potassium Citrate (3) | 3.41 | 3.42 | 3.42 | 3.42 | 3.42 |
| Riboflavin | 0.003 | 0.003 | 0.003 | 0.003 | 0.003 |
| L-Carnitine | 0.026 | 0.026 | 0.026 | 0.026 | 0.026 |
| Vetamin/Mineral Premix | 1.11 | 1.11 | 1.11 | 1.11 | 1.11 |
| Fenous Sulfate | 0.45 | 0.45 | 0.45 | 0.45 | 0.47 |
| Potassium Citrate (2) | 0.026 | 0.026 | 0.026 | 0.026 | 0.026 |
| Nucleotide/Choline Premix | 2.33 | 2.34 | 2.34 | 2.34 | 2.39 |
| **Dryblend Ingredients** | | | | | |
| Lactose (Food Grade: 200 mesh) | 100.00 | 150.00 | 250.00 | 450.00 | 500.00 |
| Lecithin (ULTRALEC® F Deoiled Lecithin) | 5.00 | 1.30 | 2.50 | 2.00 | 2.00 |

**Table 3C: Nutritional Infant Formulas**

| **Ingredients** | **Example 1** | **Example 2** | **Example3** | **Example 4** | **Example 5** |
|---|---|---|---|---|---|
| | Quantity (lbs) per 1000 lbs | Quantity (lbs) per 1000 lbs | Quantity (lbs) per 1000 lbs | Quantity (lbs) per 1000 lbs | Quantity (lbs) per 1000 lbs |
| **Base Powder Ingredients** | | | | | |
| Non-Fat Dry Milk | 203.16 | 204.10 | 203.80 | 205.62 | 164.41 |
| Lactose | 188.31 | 339.18 | 88.90 | 39.02 | 0 |
| High Oleic safflower Oil | 115.89 | 116.43 | 116.26 | 116.39 | 119.06 |
| Soy Oil | 88.04 | 88.45 | 88.32 | 88.42 | 84.23 |
| Coconut Oil | 81.09 | 81.47 | 81.35 | 81.44 | 83.11 |
| Galactooligosaccharides | 66.87 | 67.18 | 67.08 | 67.12 | b7.12 |
| Whey Protein Concentrate | 50.00 | 50.23 | 50.15 | 50.18 | 50.77 |
| Potassium Citrate (1) | 5.72 | 5.75 | 5.74 | 5.74 | 5.45 |
| Calcium Carbonate | 4.03 | 4.05 | 4.05 | 4.05 | 4.37 |
| Arachidonic Acid | 3.69 | 2.94 | 2.94 | 2.94 | 2.85 |
| Potassium Chloride | 1.25 | 1.26 | 1.26 | 1.26 | 1.24 |
| Docosahexaenoic Acid | 1.11 | 1.11 | 1.11 | 1.11 | 1.09 |
| Magnesium Chloride | 1.03 | 1.04 | 1.04 | 1.04 | 0.95 |
| Sodium Chloride | 0.59 | 0.59 | 0.59 | 0.59 | 0.34 |
| Choline Chloride | 0.43 | 0.43 | 0.43 | 0.43 | 0.43 |
| Vitamin ADEK | 0.39 | 0.39 | 0.39 | 0.39 | 0.36 |
| Ascorbyl Palmitate | 0.37 | 0.37 | 0.37 | 0.37 | 0.36 |
| Mixed Carotenoid Premix | 0.35 | 0.35 | 0.35 | 0.19 | 0.19 |
| Mixed Tocopherols | 0.16 | 0.16 | 0.16 | 0.16 | 0.16 |
| Ascorbic Acid | 1.27 | 1.27 | 1.27 | 1.27 | 1.27 |
| Potassium Citrate (3) | 3.41 | 3.42 | 3.42 | 3.42 | 3.42 |
| Riboflavin | 0.003 | 0.003 | 0.003 | 0.003 | 0.003 |
| L-Carnitine | 0.026 | 0.026 | 0.026 | 0.026 | 0.026 |
| Vitamin/Mineral Premix | 1.11 | 1.11 | 1.11 | 1.11 | 1.11 |
| Ferrous Sulfate | 0.45 | 0.45 | 0.45 | 0.45 | 0.47 |
| Potassium Citrate (2) | 0.026 | 0.026 | 0.026 | 0.026 | 0.026 |
| Nucleotide/Choline Premix | 2.33 | 2.34 | 2.34 | 2.34 | 2.39 |
| **Dryblend Ingredients** | | | | | |
| Lactose (Food Grade: 100 mesh) | 200.00 | 50.00 | 300.00 | 350.00 | 378.37 |
| Lecithin (ULTRALEC® F Deoiled Lecithin) | 5.00 | 1.30 | 2.50 | 0.30 | 50.00 |

**Table 3D: Nutritional Infant Formulas**

| **Ingredients** | **Example 1** | **Example 2** | **Example 3** | **Example 4** | **Example 5** |
|---|---|---|---|---|---|
| | Quantity (lbs) per 1000 lbs | Quantity (lbs) per 1000 lbs | Quantity (lbs) per 1000 lbs | Quantity (lbs) per 1000 lbs | Quantity (lbs) per 1000 lbs |
| **Base Powder Ingredients** | | | | | |
| Non-Fat Dry Milk | 203.16 | 204.10 | 203.80 | 144.64 | 0.37 |
| Lactose | 288.31 | 239.18 | 138.90 | 0 | 0 |
| High Oleic safflower Oil | 115.89 | 116.43 | 116.26 | 116.39 | 119.06 |
| Soy Oil | 88.04 | 88.45 | 88.32 | 88.42 | 84.23 |
| Coconut Oil | 81.09 | 81.47 | 81.35 | 81.44 | 83.11 |
| Galactooligosaccharides | 66.87 | 67.18 | 67.08 | 67.12 | 67.12 |
| Whey Protein Concentrate | 50.00 | 50.23 | 50.15 | 50.18 | 50.77 |
| Potassium Citrate (1) | 5.72 | 5.75 | 5.74 | 5.74 | 5.45 |
| Calcium Carbonate | 4.03 | 4.05 | 4.05 | 4.05 | 4.37 |
| Arachidonic Acid | 3.69 | 2.94 | 2.94 | 2.94 | 2.85 |
| Potassium Chloride | 1.25 | 1.26 | 1.26 | 1.26 | 1.24 |
| Docosahexaenoic Acid | 1.11 | 1.11 | 1.11 | 1.11 | 1.09 |
| Magnesium Chloride | 1.03 | 1.04 | 1.04 | 1.04 | 0.95 |
| Sodium Chloride | 0.59 | 0.59 | 0.59 | 0.59 | 0.34 |
| Choline Chloride | 0.43 | 0.43 | 0.43 | 0.43 | 0.43 |
| Vitamin ADEK | 0.39 | 0.39 | 0.39 | 0.39 | 0.36 |
| Ascorbyl Palmitate | 0.37 | 0.37 | 0.37 | 0.37 | 0.36 |
| Mixed Carotenoid Premix | 0.35 | 0.35 | 0.35 | 0.19 | 0.19 |
| Mixed Tocopherols | 0.16 | 0.16 | 0.16 | 0.16 | 0.16 |
| Ascorbic Acid | 1.27 | 1.27 | 1.27 | 1.27 | 1.27 |
| Potassium Citrate (3) | 3.41 | 3.42 | 3.42 | 3.42 | 3.42 |
| Riboflavin | 0.003 | 0.003 | 0.003 | 0.003 | 0.003 |
| L-Carnitine | 0.026 | 0.026 | 0.026 | 0.026 | 0.026 |
| Vitamin/Mineral Premix | 1.11 | 1.11 | 1.11 | 1.11 | 1.11 |
| Ferrous Sulfate | 0.45 | 0.45 | 0.45 | 0.45 | 0.47 |
| Potassium Citrate (2) | 0.026 | 0.026 | 0.026 | 0.026 | 0.026 |
| Nucleotide/Choline Premix | 2.33 | 2.34 | 2.34 | 2.34 | 2.39 |
| **Dryblend Ingredients** | | | | | |
| Lactose (Food Grade: 200 mesh) | 100.00 | 150.00 | 250.00 | 450.00 | 500.00 |
| Lecithin (ULTRALEC® F Deoiled Lecithin) | 5.00 | 1.30 | 2.50 | 0.30 | 50.00 |

The exemplified formulas may be prepared by making at least two separate slurries that are later blended together, heat treated, standardized, heat treated a second time, spray dried, agglomerated, dry blended, and packaged.

Initially, a mineral slurry is prepared by dissolving the minerals in water at 46-57°C, followed by the addition of magnesium chloride, choline chloride, potassium chloride, potassium citrate, and sodium chloride. The resulting slurry is held under moderate agitation at 46-57°C until it is later blended with the other prepared slurries.

An oil slurry is prepared by combining high oleic safflower oil, soy oil, and coconut oil at 27-43°C, followed by the addition of ascorbyl palmitate, mixed tocopherols, mixed carotenoid premix, and vitamin ADEK. The resulting oil slurry is held under moderate agitation at 27-43°C until it is later blended with the other prepared slurries.

Water, whey protein concentrate, non-fat milk, lactose, galactooligosaccharides, the mineral slurry, oil blend, calcium/oil blend dispersion, arachidonic acid and docosahexaenoic acid are combined under adequate agitation. The pH of the resulting blend is adjusted to about 6.70 with potassium hydroxide. This blend is held under moderate agitation at 49-60°C for not greater than about 2 hours.

The resulting blend is heated to 74-85°C, homogenized at 2400-2600/400-600 psig, and then heated to 127-132°C, for about 5 seconds. The heated blend is passed through a flash cooler to reduce the temperature and then through a plate cooler to further reduce the temperature to 2-7°C. Samples are taken for analytical testing. The mixture is held under agitation.

A vitamin/mineral premix solution and an ascorbic acid solution are prepared separately and added to the processed blended slurry. The vitamin/mineral premix solution is prepared by adding the following ingredients to water with agitation: potassium citrate, ferrous sulfate, vitamin/mineral premix, L-carnitine, riboflavin, and the nucleotide-choline premix. The ascorbic acid solution is prepared by adding potassium hydroxide and ascorbic acid to a sufficient amount of water to dissolve the ingredients.

The blend pH may be further adjusted with potassium hydroxide to achieve optimal product stability. The blend is then evaporated and receives a second heat treatment. The evaporated blend is heated to 74-82°C, for about 16 seconds.

The evaporated blend is passed through a spray drier. The finished powder then undergoes agglomeration with water as the binder solution, and is then, when appropriate, dry blended with additional lactose and lecithin to produce a substantially homogeneous powdered product. The completed product is then packaged into suitable containers.

The resulting powdered nutritional formula is then used to provide a supplemental, primary, or sole source of nutrition to infants or other appropriate individuals.

### Example 6

A study is conducted to evaluate and compare the physical appearance (i.e., foaming) of powdered infant formulas containing dryblended lactose and lecithin. These infant formulas are compared to conventional infant formulas that are prepared without dryblending lactose and lecithin into the powdered formula. Formula ingredients for each sample formula are listed in Table 4.

**Table 4: Nutritional Infant Formulas**

| **Ingredients** | **Control Sample Formula** | **Sample Formula 1** | **Sample Formula 2** | **Sample Formula 3** | **Sample Formula 4** |
|---|---|---|---|---|---|
| | Quantity (lbs) per 1000 lbs | Quantity (lbs) per 1000 lbs | Quantity (lbs) per 1000 lbs | Quantity (lbs) per 1000 lbs | Quantity (lbs) per 1000 lbs |
| **Base Powder Ingredients** | | | | | |
| Non-Fat Dry Milk | 204.43 | 203.16 | 204.10 | 203.80 | 204.43 |
| Lactose | 389.49 | 188.31 | 189.18 | 188.90 | 189.49 |
| High Oleic Safflower Oil | 116.62 | 115.89 | 116.43 | 116.26 | 116.62 |
| Soy Oil | 88.59 | 88.04 | 88.45 | 88.32 | 88.59 |
| Coconut Oil | 81.60 | 81.09 | 81.47 | 81.35 | 81.60 |
| Galactooligosaccharides | 67.29 | 66.87 | 67.18 | 67.08 | 67.29 |
| Whey Protein Concentrate | 50.31 | 50.00 | z | 50.15 | 50.31 |
| Potassium Citrate (1) | 5.76 | 5.72 | 5.75 | 5.74 | 5.76 |
| Calcium Carbonate | 4.06 | 4.03 | 4.05 | 4.05 | 4.06 |
| Arachidonic Acid | 2.95 | 3.69 | 2.94 | 2.94 | 2.95 |
| Potassium Chloride | 1.26 | 1.25 | 1.26 | 1.26 | 1.26 |
| Lecithin (ULTRALEC® F Deoiled Lecithin) | 1.15 | 0 | 0 | 0 | 1.15 |
| Docosahexaenoic Acid | 1.11 | 1.11 | 1.11 | 1.11 | 1.11 |
| Magnesium Chloride | 1.04 | 1.03 | 1.04 | 1.04 | 1.04 |
| Sodium Chloride | 0.59 | 0.59 | 0.59 | 0.59 | 0.59 |
| Choline Chloride | 0.43 | 0.43 | 0.43 | 0.43 | 0.43 |
| Vitamin ADEK | 0.39 | 0.39 | 0.39 | 0.39 | 0.39 |
| Ascorbyl Palpitate | 0.37 | 0.37 | 0.37 | 0.37 | 0.37 |
| Mixed Carotenoid Premix | 0.35 | 0.35 | 0.35 | 0.35 | 0.35 |
| Mixed Tocopherols | 0.16 | 0.16 | 0.16 | 0.16 | 0.16 |
| Ascorbic Acid | 1.28 | 1.27 | 1.27 | 1.27 | 1.28 |
| Potassium Citrate (3) | 3.43 | 3.41 | 3.42 | 3.42 | 3.43 |
| Riboflavin | 0.003 | 0.003 | 0.003 | 0.003 | 0.003 |
| L-Carnitine | 0.026 | 0.026 | 0.026 | 0.026 | 0.026 |
| Vitamin/Mineral Premix | 1.12 | 1.11 | 1.11 | 1.11 | 1.12 |
| Ferrous Sulfate | 0.45 | 0.45 | 0.45 | 0.45 | 0.45 |
| Potassium Citrate (2) | 0.026 | 0.026 | 0.026 | 0.026 | 0.026 |
| Nucleotide/Choline Premix | 2.35 | 2.33 | 2.34 | 2.34 | 2.35 |
| **Dryblend Ingredients** | | | | | |
| Lactose (Food Grade: 100 mesh) | 0 | 200.00 | 200.00 | 200.00 | 200.00 |
| Lecithin (ULTRALEC® F | 0 | 5.00 | 1.30 | 2.50 | 0 |
| Deoiled Lecithin) | | (0.5 wt.%) | (0.13 wt.%) | (0.25 wt.%) | |

The formulas were prepared as described in Examples 1-5 above. Once prepared, 17 grams of the sample powder formula was reconstituted with 120 g of tap water at room temperature in an 8 oz. clear plastic bottle. The bottle was manually shaken up and down 10 times.

The total volume of foam and liquid (ml) in the bottle was measured. The total volume was then again measured at 1 minute and 2 minutes after shaking.

The bottle was then inverted for approximately 1-2 seconds and returned to an upright position. After sitting for approximately 15 seconds, the total volume was then again measured. The results are shown in Table 5.

**Table 5**

| **Sample Formula** | **Amt. of Dry Blend Lactose (%)** | **Amt. Dry Blend Lecithin (%)** | **Total Volume Immediately After Shaking** | **Total Volume at 1 Minute after Shaking** | **Total Volume at 2 Minutes after Shaking** | **Total Volume after Inversion** |
|---|---|---|---|---|---|---|
| Control | 0 | 0 | 200 | 180 | 175 | 170 |
| Sample Formula 1 | 20 | 0.5 | 170 | 170 | 167.5 | 155 |
| Sample Formula 2 | 20 | 0.13 | 170 | 170 | 160 | 160 |
| Sample Formula 3 | 20 | 0.25 | 180 | 165 | 160 | 160 |
| Sample Formula 4(1)* | 20 | 0 | 200 | 200 | 190 | 175 |
| Sample Formula 4(2)* | 20 | 0 | 210 | 210 | 200 | 180 |

| | | | | | | |
|---|---|---|---|---|---|---|
| * Two samples of Formula 4 (i.e., Sample Formula 4(1) and 4(2)) were analyzed for total volume of foam and liquid present after shaking. | | | | | | |

As shown in Table 5, the addition of dryblended lecithin to Sample Formulas z and 3 reduced the amount of foaming as compared to Sample Formula 4 and the Control Sample, which did not include any dry blended lecithin. Specifically, foaming was less in the Sample Formulas with dryblended lecithin (Sample Formulas 1, 2, and 3) as compared to the Control Infant Formula, which is a conventional infant formula prepared without the dryblending of lactose or lecithin or Sample Formula 4, which is a conventional infant formula with the dryblending of lactose but no dryblended lecithin.

### Example 7

A study is conducted to evaluate and compare the physical appearance (i.e., foaming) of additional infant formulas containing the dryblended lactose and lecithin. These infant formulas are compared to conventional infant formulas that are prepared without dryblending lactose and lecithin. Formula ingredients for each sample formula are listed in Table 6.

**Table 6: Nutritional Infant Formulas**

| **Ingredients** | **Control Sample Formula A** | **Sample Formula 5** | **Sample Formula 6** |
|---|---|---|---|
| | Quantity (lbs) per 1000 lbs | Quantity (lbs) per 1000 lbs | Quantity (lbs) per 1000 lbs |
| **Base Powder Ingredients** | | | |
| Non-Fat Dry Milk | 204.43 | 204.43 | 203.92 |
| Lactose | 389.49 | 189.49 | 189.02 |
| High Oleic safflower Oil | 116.69 | 116.69 | 116.39 |
| Soy Oil | 88.64 | 88.64 | 88.42 |
| Coconut Oil | 81.65 | 81.65 | 81.44 |
| Galactooligosaccharides | 67.29 | 67.29 | 67.12 |
| Whey Protein Concentrate | 50.31 | 50.31 | 50.18 |
| Potassium Citrate (1) | 5.76 | 5.76 | 5.74 |
| Calcium Carbonate | 4.06 | 4.06 | 4.05 |
| Arachidonic Acid | 2.95 | 2.95 | 2.94 |
| Potassium Chloride | 1.26 | 1.26 | 1.26 |
| Lecithin Ultralec | 1.15 | 1.15 | 0 |
| Docosahexaenoic Acid | 1.11 | 1.11 | 1.11 |
| Magnesium Chloride | 1.04 | 1.04 | 1.04 |
| Sodium Chloride | 0.59 | 0.59 | 0.59 |
| Choline Chloride | 0.43 | 0.43 | 0.43 |
| Vitamin ADEK | 0.39 | 0.39 | 0.39 |
| Ascorbyl Palmitate | 0.37 | 0.37 | z |
| Mixed Carotenoid Premix | 0.19 | 0.19 | 0.19 |
| Mixed Tocopherols | 0.17 | 0.17 | 0.16 |
| Ascorbic Acid | 1.28 | 1.28 | 1.27 |
| Potassium Citrate (3) | 3.43 | 3.43 | 3.42 |
| Riboflavin | 0.003 | 0.003 | 0.003 |
| L-Carnitine | 0.026 | 0.026 | 0.026 |
| Vitamin/Mineral Premix | 1.12 | 1.12 | 1.11 |
| Ferrous Sulfate | 0.45 | 0.45 | 0.45 |
| Potassium Citrate (2) | 0.026 | 0.026 | 0.026 |
| Nucleotide/Choline Premix | 2.35 | 2.35 | 2.34 |
| **Dryblend Ingredients** | | | |
| Lactose | 0 | 200.00 | 200.00 |
| Lecithin Ultralec | 0 | 0 | 2.00 |

The formulas were prepared as described in Examples 1-5 above. Once prepared, 26 grams of each sample formula was reconstituted with 180 ml of tap water at room temperature in an 8 oz. clear plastic bottle. The bottle was placed into a mechanical shaker and shook at a speed of about 4 cycles/second for 5 seconds.

Approximately two-thirds of the sample was then immediately poured into a 250-ml cylinder. The remaining liquid was swirled in the bottle to capture any remaining foam in the bottle and poured to the cylinder. The amount of foam (ml) was measured in the cylinder. The amount of foam was then again measured at 30 minutes after shaking. The results are shown in Table 7.

**Table 7**

| | **Amt. of Dryblend Lactose** | **Amt of Dryblend Lecithin** | **Amount of Foam Immediately After Shaking (ml)** | **Amount of Foam 30 Minutes after Shaking (ml)** |
|---|---|---|---|---|
| Control Sample Formula A | 0 | 0 | 10 | 10 |
| Formula 5 | 200.00 | 0 | 30 | 24 |
| Formula 6 | 200.00 | 2.00 | 18 | 16 |

As shown in Table 7, by adding lecithin to the dry blend of the formulas, foaming can be reduced. Specifically, Formula 5, which included only lactose in the dry blend, had a higher foaming level as compared to Formula 6, in which lecithin was added to the dry blend including dryblended lactose. Moreover, it appears that in some embodiments, the lecithin and lactose can be dryblended to create a formula with similar foaming properties as conventional infant formulas that are prepared without any dryblending of lactose and lecithin.

### CONCLUSION

The data as set forth herein shows that powdered infant formulas containing the dryblended lactose and lecithin as described in the present disclosure can be formulated more energy efficiently, without comprising the level of lactose that would otherwise be provided in conventional infant formulas with lactose added solely in the base powder. The data shows that the dryblended powdered infant formulas of the present disclosure can be formulated to have at least the same foaming aesthetic properties as conventional infant formulas that have all of the carbohydrate introduced therein upstream of the drying process. Additionally, the data shows that powdered infant formulas that have both dryblended lactose and dryblended lecithin have improved foaming properties as compared to powdered infant formulas that include dryblended lactose but no dryblended lecithin.

## Claims

1. A method of manufacturing a nutritional powder, the method comprising: forming an aqueous slurry containing carbohydrates, proteins, lipids, stabilizers or other formulation aids, vitamins, minerals, or combinations thereof; preparing a base nutritional powder from the aqueous slurry; and dryblending into the base nutritional powder a carbohydrate and a powdered lecithin, wherein the nutritional powder is an infant formula.

2. The method of claim 1 wherein the lecithin is selected from the group consisting of standard lecithin, enzyme modified lecithin, hydrolyzed lecithin, modified lecithin powders, and combinations thereof.

3. The method of claim 1 or 2 wherein the lecithin is dryblended into the base nutritional powder in an amount of from about 0.03% (by weight of the nutritional powder) to about 5% (by weight of the nutritional powder).

4. The method of claim 1 or 2 wherein the lecithin is dryblended into the base nutritional powder in an amount of from about 0.03% (by weight of the nutritional powder) to about 2% (by weight of the nutritional powder).

5. The method of claim 1 or 2 wherein the lecithin is dryblended into the base nutritional powder in an amount of from about 0.13% (by weight of the nutritional powder) to about 0.5% (by weight of the nutritional powder).

6. The method of any one of claims 1 to 5 wherein in the dryblending step the carbohydrate is selected from the group consisting of lactose, corn syrup solids, maltodextrin, sucrose and combinations thereof.

7. The method of claim 6 wherein in the dryblending step the carbohydrate is lactose.

8. The method of any one of claims 1 to 7 wherein in the dryblending step the carbohydrate is dryblended into the base nutritional powder in an amount of from about 5% (by weight of the nutritional powder) to about 50% (by weight of the nutritional powder).

9. The method of any one of claims 1 to 7 wherein in the dryblending step the carbohydrate is dryblended into the base nutritional powder in an amount of from about 5% (by weight of the nutritional powder) to about 33% (by weight of the nutritional powder).

10. The method of any one of claims 1 to 7 wherein in the dryblending step the carbohydrate is dryblended into the base nutritional powder in an amount of from about 15% (by weight of the nutritional powder) to about 20% (by weight of the nutritional powder).

## Patentansprüche

1. Verfahren zur Herstellung eines Nahrungsmittelpulvers, wobei das Verfahren Folgendes aufweist: Bilden einer wässrigen Suspension, die Kohlenhydrate, Proteine, Lipide, Stabilisatoren oder andere Zusammensetzungshilfsmittel, Vitamine, Mineralien oder Kombinationen davon enthält; Erstellen eines Basis-Nahrungsmittelpulvers aus der wässrigen Suspension; und Trockenmischen eines Kohlenhydrats und eines pulverisierten Lecithins in das Basis-Nahrungsmittelpulver, wobei das Nahrungsmittelpulver eine Säuglingsanfangsnahrung ist.

2. Verfahren nach Anspruch 1, wobei das Lecithin aus der Gruppe bestehend aus standardmäßigem Lecithin, enzym-modifiziertem Lecithin, hydrolysiertem Lecithin, modifiziertem Lecithin-Pulver und Kombinationen davon ausgewählt ist.

3. Verfahren nach Anspruch 1 oder 2, wobei das Lecithin in das Basis-Nahrungsmittelpulver in einer Menge von ungefähr 0,03 Gew.-% (des Nahrungsmittelpulvers) bis ungefähr 5 Gew.-% (des Nahrungsmittelpulvers) trockengemischt ist.

4. Verfahren nach Anspruch 1 oder 2, wobei das Lecithin in das Basis-Nahrungsmittelpulver in einer Menge von ungefähr 0,03 Gew.-% (des Nahrungsmittelpulvers) bis ungefähr 2 Gew.-% (des Nahrungsmittelpulvers) trockengemischt ist.

5. Verfahren nach Anspruch 1 oder 2, wobei das Lecithin in das Basis-Nahrungsmittelpulver in einer Menge von ungefähr 0,13 Gew.-% (des Nahrungsmittelpulvers) bis ungefähr 0,5 Gew.-% (des Nahrungsmittelpulvers) trockengemischt ist.

6. Verfahren nach einem der Ansprüche 1 bis 5, wobei im Schritt des Trockenmischens das Kohlenhydrat aus der Gruppe bestehend aus Laktose, Maissirup-Feststoffen, Maltodextrin, Sucrose und Kombinationen davon ausgewählt ist.

7. Verfahren nach Anspruch 6, wobei im Schritt des Trockenmischens das Kohlenhydrat Laktose ist.

8. Verfahren nach einem der Ansprüche 1 bis 7, wobei im Schritt des Trockenmischens das Kohlenhydrat in das Basis-Nahrungsmittelpulver in einer Menge von ungefähr 5 Gew.-% (des Nahrungsmittelpulvers) bis ungefähr 50 Gew.-% (des Nahrungsmittelpulvers) trockengemischt ist.

9. Verfahren nach einem der Ansprüche 1 bis 7, wobei im Schritt des Trockenmischens das Kohlenhydrat in das Basis-Nahrungsmittelpulver in einer Menge von ungefähr 5 Gew.-% (des Nahrungsmittelpulvers) bis ungefähr 33 Gew.-% (des Nahrungsmittelpulvers) trockengemischt ist.

10. Verfahren nach einem der Ansprüche 1 bis 7, wobei im Schritt des Trockenmischens das Kohlenhydrat in das Basis-Nahrungsmittelpulver in einer Menge von ungefähr 15 Gew.-% (des Nahrungsmittelpulvers) bis ungefähr 20 Gew.-% (des Nahrungsmittelpulvers) trockengemischt ist.

## Revendications

1. Procédé de fabrication d'une poudre nutritionnelle, le procédé comprenant le fait : de former une suspension aqueuse contenant des glucides, des protéines, des lipides, des stabilisants ou d'autres adjuvants de formulation, des vitamines, des minéraux ou leurs combinaisons ; de préparer une poudre nutritionnelle de base à partir de la suspension aqueuse ; et de mélanger à sec, dans la poudre nutritionnelle de base, du glucide et de la lécithine en poudre, où la poudre nutritionnelle est une préparation pour nourrissons.

2. Procédé de la revendication 1, dans lequel la lécithine est choisie dans le groupe consistant en la lécithine standard, la lécithine modifiée par une enzyme, la lécithine hydrolysée, des poudres de lécithine modifiée et leurs combinaisons.

3. Procédé de la revendication 1 ou 2, dans lequel la lécithine est mélangée à sec dans la poudre nutritionnelle de base en une quantité allant d'environ 0,03% (en poids de la poudre nutritionnelle) à environ 5% (en poids de la poudre nutritionnelle).

4. Procédé de la revendication 1 ou 2, dans lequel la lécithine est mélangée à sec dans la poudre nutritionnelle de base en une quantité allant d'environ 0,03% (en poids de la poudre nutritionnelle) à environ 2% (en poids de la poudre nutritionnelle).

5. Procédé de la revendication 1 ou 2, dans lequel la lécithine est mélangée à sec dans la poudre nutritionnelle de base en une quantité allant d'environ 0,13% (en poids de la poudre nutritionnelle) à environ 0,5% (en poids de la poudre nutritionnelle).

6. Procédé de l'une quelconque des revendications 1 à 5, dans lequel, dans l'étape de mélange à sec, le glucide est choisi dans le groupe consistant en le lactose, le sirop de glucose déshydraté, la maltodextrine, le saccharose et leurs combinaisons.

7. Procédé de la revendication 6, dans lequel, dans l'étape de mélange à sec, le glucide est le lactose.

8. Procédé de l'une quelconque des revendications 1 à 7, dans lequel, dans l'étape de mélange à sec, le glucide est mélangé à sec dans la poudre nutritionnelle de base en une quantité allant d'environ 5% (en poids de la poudre nutritionnelle) à environ 50% (en poids de la poudre nutritionnelle).

9. Procédé de l'une quelconque des revendications 1 à 7, dans lequel, dans l'étape de mélange à sec, le glucide est mélangé à sec dans la poudre nutritionnelle de base en une quantité allant d'environ 5% (en poids de la poudre nutritionnelle) à environ 33% (en poids de la poudre nutritionnelle).

10. Procédé de l'une quelconque des revendications 1 à 7, dans lequel, dans l'étape de mélange à sec, le glucide est mélangé à sec dans la poudre nutritionnelle de base en une quantité allant d'environ 15% (en poids de la poudre nutritionnelle) à environ 20% (en poids de la poudre nutritionnelle).
